# EUROPEAN PATENT SPECIFICATION

(11) **EP 1 368 254 B1**
(45) Date of publication and mention of the grant of the patent: **14.12.2005**
(21) Application number: 02701287.1
(22) Date of filing: 18.02.2002
(51) Int. Cl.: B65D 83/32, B65D 83/20, B65D 83/28, B65D 83/56, B65D 83/66

(54) **DISPENSER WITH EFFERVESCENT BEVERAGE PRODUCT**
SPENDER MIT BRAUSENDEM GETRÄNK
DISTRIBUTEUR CONTENANT UNE BOISSON EFFERVESCENTE

(30) Priority: 05.03.2001 EP 01302000; 23.05.2001 GB 0112473; 25.05.2001 GB 0112757; 13.09.2001 GB 0122150
(43) Date of publication of application: 10.12.2003
(73) Proprietor: UNILEVER PLC, London EC4P 4BQ (GB); UNILEVER N.V., 3013 AL Rotterdam (NL)
(72) Inventor: FARR, Robert, Unilever R & D Colworth, Bedford, Bedfordshire MK44 1LQ (GB); NICMANIS, Mark, Unilever Research Port Sunlight, Wirral, Merseyside CH63 3JW (GB)
(74) Representative: Hugot, Alain
(86) International application number: PCT/EP2002/001810
(87) International publication number: WO 2002/070372

(56) References cited:
- EP-A- 0 773 012
- US-A- 3 069 098
- US-A- 4 116 370
- US-A- 5 143 288

## Description

This invention relates to a beverage product that comprises a dispenser and a pressurised beverage with a sparingly soluble effervescence inducing gas dissolved therein. The dispenser has a valve that can be opened to allow for the beverage to be discharged as an effervescent fluid.

### Background and prior art

Carbonated beverages such as mineral water, soft drinks and iced teas are very popular with consumers. Carbon dioxide is readily soluble in water, it has a solubility of 1.69 g kg⁻¹ in water at 20° C and atmospheric pressure), and it is cheap, widely available and non-harmful. When carbon dioxide is mixed under pressure with a drinkable liquid in a container a substantial proportion of the gas remains dissolved in the drinkable liquid when the container is opened to the atmosphere. That enables the container to be resealed and stored for a short time if desired, with minimal deterioration to the gaseous liquid. These carbonated beverages are usually contained in aluminium cans or bottles made of glass or plastic.

The presence of a large amount of carbon dioxide in solution in a beverage produces a distinctive taste of carbonic acid. Some consumers find both the prickly sensation and the taste of carbonic acid to be unpleasant. It can also produce an uncomfortable bloating feeling.

Gases that are sparingly soluble in water, such as oxygen, are not usually employed in a drinkable liquid in the same manner as more soluble gases such as carbon dioxide. Oxygen has a solubility of 0.043 g kg⁻¹ in water at 20° C and atmospheric pressure. As a result, when oxygen is added to a drinkable liquid under atmospheric conditions, or a container holding a pressurised oxygenated beverage is opened to the atmosphere, a substantial proportion of the oxygen contained in the beverage and packaging will rapidly escape from the beverage and be dispersed in the surrounding atmosphere.

Notwithstanding these difficulties, several attempts have been made to make a beverage that contains dissolved oxygen.

Japanese patent specification JP 64-27458 discloses a health drink product comprising a beverage with oxygen dissolved therein under pressure. However, since oxygen is very sparingly soluble in water and in the known health beverage nearly all of the oxygen packaged with the beverage escapes, when the beverage container is opened. As a result, there is almost no effervescence on consumption.

United States patent specification US 5378480 describes a method for preparing an oxygenated beverage that is to be immediately ingested following preparation. The method involves measuring out in a container a quantity of powder that includes a foaming agent capable of trapping and temporarily holding oxygen gas, adding that powder to a predetermined quantity of liquid, evenly mixing the powder and liquid to produce a foamed beverage, and using a hand-held oxygen canister to evenly disperse oxygen throughout the beverage within the container via a dispensing tube. US 5378480 teaches that the beverage must be immediately ingested following preparation or else the oxygen content of the beverage will be rapidly lost.

Japanese patent specification JP 1168269 concerns a method of improving the flavour of a drink by generating bubbles in a drink that contains a large amount of oxygen. The drink is gasified by dispersing pressurised oxygen into a drink into which a high concentration of oxygen has already been dissolved. The spray nozzle is operated to open the valve and release the water containing oxygen dissolved therein.

There therefore remains a need for a beverage product containing a sparingly soluble effervescence inducing gas that gives a smooth and silky mouthfeel when dispensed from a suitable dispenser that avoids at least some of the aforementioned disadvantages of the known products or at least provides the consumer with a useful alternative.

### Statement of the invention

In broad terms the present invention relates to a beverage product comprising a dispenser and a beverage in which the dispenser has a container for holding the beverage and a valve which is biased to a position where it seals the container but which is openable to enable the beverage to be dispensed from the container and in which the beverage is a liquid having a sparingly soluble effervescence inducing gas dissolved therein, the beverage product being characterised in that the beverage is held under a gaseous pressure in the head space above the liquid beverage in the container that is sufficient to cause the beverage to be discharged from the dispenser as an effervescent fluid when the valve is open.

The beverage is preferably held under a gaseous pressure in the headspace of at least 2.5 atmospheres gauge at 5 to 15° C.

The sparingly soluble effervescence inducing gas is preferably selected from the group consisting of oxygen, nitrogen, nitrous oxide, hydrogen, noble gases, gaseous hydrocarbons and mixtures thereof. If desired, a further gas which is more soluble in water than those listed above and which has a partial pressure in the headspace not exceeding 1 atmosphere absolute at 18° C, for example carbon dioxide, may also be dissolved in the beverage.

The effervescent fluid contains very small bubbles of the sparingly soluble gas and does not give the prickly sensation produced by effervescence of a more soluble gas such as carbon dioxide. The fluid provides the consumer with a smooth and silky sensation, which can enhance flavour delivery from a flavoured beverage. If the beverage is transparent, for example it is water or flavoured water, the many small bubbles of the sparingly soluble gas give the beverage a smoke-like appearance on consumption.

The beverage is preferably tea or coffee based, or water or a flavoured water.

Preferably the valve, can be of a type which is known for use in pressurised dispensing containers (often known as aerosol cans). Such valves are readily available from several manufacturers. Known aerosol valves of this type have a valve member which is normally held in a sealing position to prevent egress of the contents of the pressurised container. In the sealing position the valve member is urged into contact with a sealing member, for example by a spring. The valve member is then moved to a dispensing position to allow the contents of the pressurised container to be dispensed. As the valve member is moved towards the dispensing position, the valve member and the sealing member are moved apart allowing the passage through the valve of the contents of the pressurised container under the pressure exerted by a pressurised gas within the container (propellant). The valve member may be moved away from the sealing member by a reciprocating movement or by a rocking movement. Though the above-described aerosol valves are preferred, any valve that is suitable for the purpose could be used in the present invention. Hereinafter valves of the type described above will be referred to as "aerosol valves"

The amount of liquid beverage and effervescence inducing gas inside the container is preferably such that several portions of effervescent fluid can be dispensed over a period of time by successive openings of the valve.

The dispenser preferably includes actuator means in the outlet portion of the dispenser that are operable to open the valve to release the effervescent fluid from the container. The actuator means is preferably shaped and positioned to be engaged and operated by a consumer's mouth or teeth so that the effervescent fluid can be discharged directly into the consumer's mouth. Preferably, the actuator means includes a button mounted in the outlet portion, the button being movable between a valve-closed position and a valve-open position to which it can be moved by a biting action applied to the outlet portion.

The container preferably has a dip tube that extends from the valve into the interior of the container so that the end of the dip tube is below the level of the beverage when the container is upright so that the effervescent fluid is urged to pass through the dip tube when the valve is open. The dip tube may have an aperture which communicates between the headspace above the beverage in the container and the interior of the dip tube enabling gas from the headspace to be entrained in fluid being dispensed through the dip tube when the valve is open. In the container having an aperture in the dip tube the quantity of gas expelled from the container when the valve is opened is greater than 0.5 cubic centimetres per 1 cubic centimetre of liquid beverage when measured at at atmospheric pressure and 20° C.

The present invention can also be said to be a method for producing an effervescent beverage fluid comprising placing a liquid beverage in a container, sealing the container, introducing a sparingly soluble effervescence inducing gas into the container so that the gaseous pressure in the headspace of the container is sufficient to cause the beverage to be discharged from the dispenser as an effervescent fluid when the valve is open, and opening that valve to discharge the beverage as said effervescent fluid.

For the avoidance of doubt the word "comprising" is intended to mean including but not necessarily "consisting of" or "composed of". In other words the listed steps or options need not be exhaustive.

Except in the examples, or where otherwise explicitly indicated, all numbers in this description indicating amounts or concentrations of material ought to be understood as modified by the word "about".

### Brief description of the drawings

The invention will now be further described, by way of example, with reference to the accompanying drawings, in which:
Figure 1 is a cross-sectional side view of a first preferred embodiment of a beverage product of the present invention.
Figure 2 is a cross-sectional view to an enlarged scale of the valve of the beverage product shown in Figure 1.
Figure 3 is a cross-sectional side view of a second preferred embodiment of a beverage product of the present invention.
Figure 4 is a cross-sectional side view of a third preferred embodiment of a beverage product of the present invention.
Figure 5 is a cross-sectional side view of a fourth preferred embodiment of a beverage product of the present invention.
Figures 6a, 6b, 6c and 6d show internal and external views of a first preferred mouth operated actuator that can be used to dispense the beverage from the beverage product of the present invention
Figures 7a, 7b, 7c and 7d show internal and external views of a second preferred mouth operated actuator that can be used to dispense the beverage from the beverage product of the present invention
Figures 8a, 8b, 8c and 8d show internal and external views of a third preferred mouth operated actuator that can be used to dispense the beverage from the beverage product of the present invention
Figures 9a and 9b show internal views of a fourth preferred mouth operated actuator that can be used to dispense the beverage from the beverage product of the present invention
Figures 10a, 10b, 10c and 10d show internal and external views of a fifth preferred mouth operated actuator that can be used to dispense the beverage from the beverage product of the present invention
Figures 11a and 11b show internal views of a sixth preferred mouth operated actuator that can be used to dispense the beverage from the beverage product of the present invention
Figures 12a, 12b, 12c and 12d show internal and external views of a seventh preferred mouth operated actuator that can be used to dispense the beverage from the beverage product of the present invention
Figures 13a, 13b, 13c and 13d show internal and external views of an eighth preferred mouth operated actuator that can be used to dispense the beverage from the beverage product of the present invention
Figures 14a, 14b and 14c show cross-sectional views of a ninth preferred mouth operated actuator that can be used to dispense the beverage from the beverage product of the present invention
Figure 15 is a cross-sectioned view of a fifth preferred embodiment of a beverage product of the present invention that includes a widget-type device.
Figures 16a and 16b are perspective views, from above and below respectively, of the widget-type device shown in Figure 15.
Figure 17 is a cross-sectional view of a sixth preferred embodiment of the beverage product of the present invention that has a gas capsule that is held within the container underneath the splayed end of a dip tube.
Figure 18 is a graph indicating acceptable pressures for the beverage product shown in Figure 3 (see Example 1).
Figure 19 is a view of an assembly used to test the effervescence resulting from the use of the second embodiment of the beverage product shown in Figure 3 (see Example 2).
Figure 20 is a graph illustrating the variation of bubble size with varying partial pressure of oxygen in the beverage product shown in Figure 3 (see Example 2).

### Detailed description of the invention

The beverage product of the present invention comprises a dispenser and a pressurised beverage.

The dispenser has a container that is suitable for holding the beverage in a pressurised state and a valve that can be opened to allow for the beverage to be discharged from the dispenser as an effervescent fluid.

The beverage contains dissolved therein a sparingly soluble effervescence inducing gas. That gas can be oxygen, nitrogen, nitrous oxide, hydrogen, a noble gas, a gaseous hydrocarbon or a mixture thereof. Oxygen is specially preferred as it is non-toxic, non-asphyxiating and safe at high temperatures. If desired, a further gas which is more soluble in water than those listed above and which has a partial pressure in the headspace not exceeding 1 atmosphere absolute at 18° C, for example carbon dioxide, may also be dissolved in the beverage.

The sparingly soluble effervescence inducing gas should be dissolved in the beverage under a gaseous pressure in the headspace that is sufficient to cause the beverage to be discharged from the dispenser as an effervescent fluid when the valve is open. The present inventors have found that that pressure is preferably at least 2.5 atmospheres gauge at 5 to 15° C otherwise the gas tends to be liberated from the without producing the desired effervescent fluid when the beverage is discharged from the dispenser.

The beverage is preferably tea or coffee based or water. It could include any suitable favouring substance or substances. The beverage can include milk, a whitener, a creamer, a flavour, a sweetener, a preservative or any number or combination thereof. The beverage could also be fruit-based, vegetable-based, yoghurt-based, soya-based, alcoholic, a beer, a smoothie or a diet product. If desired the beverage packaging can contain an oxygen adsorbing material such as a zeolite to minimise oxidation.

It is convenient for the valve of the dispenser to be an aerosol valve as they are readily available, however one could use any valve that is suitable for the purpose.

When the valve is opened the pressurised beverage discharges from the container of the dispenser as an effervescent fluid. This fluid contains very small bubbles of the sparingly soluble gas and does not give the prickly sensation or bloated feeling sometimes produced by effervescence of a more soluble gas such as carbon dioxide. The effervescent fluid provides the consumer with a smooth and silky sensation. It can even enhance the flavour delivery from a flavoured beverage. If the beverage is transparent, for example water or flavoured water, the effervescence of the sparingly soluble gas gives the beverage a fine, smoke-like appearance on consumption.

The dispenser preferably includes actuator means that are operable to open the valve to release the liquid beverage from the container. The actuator means are preferably shaped and positioned to be engaged by a user's mouth or teeth so that the effervescent fluid will be delivered directly into the consumer's mouth. It could alternatively be adapted to be operated by the consumer's hand or finger. The actuator means can take a variety of forms but is preferably incorporated in an outlet portion of the dispenser. In a preferred embodiment of the dispenser the actuator means includes a button mounted in the outlet portion of the dispenser whichcan be moved between a valve-closed position and a valve-open position by a twisting, sucking or biting action that is applied to said outlet portion or by some other manner of manipulation by the consumer.

Various preferred embodiments of the dispenser of the beverage product of the present invention will now be described with reference to several preferred embodiments that are depicted in the accompanying drawings.

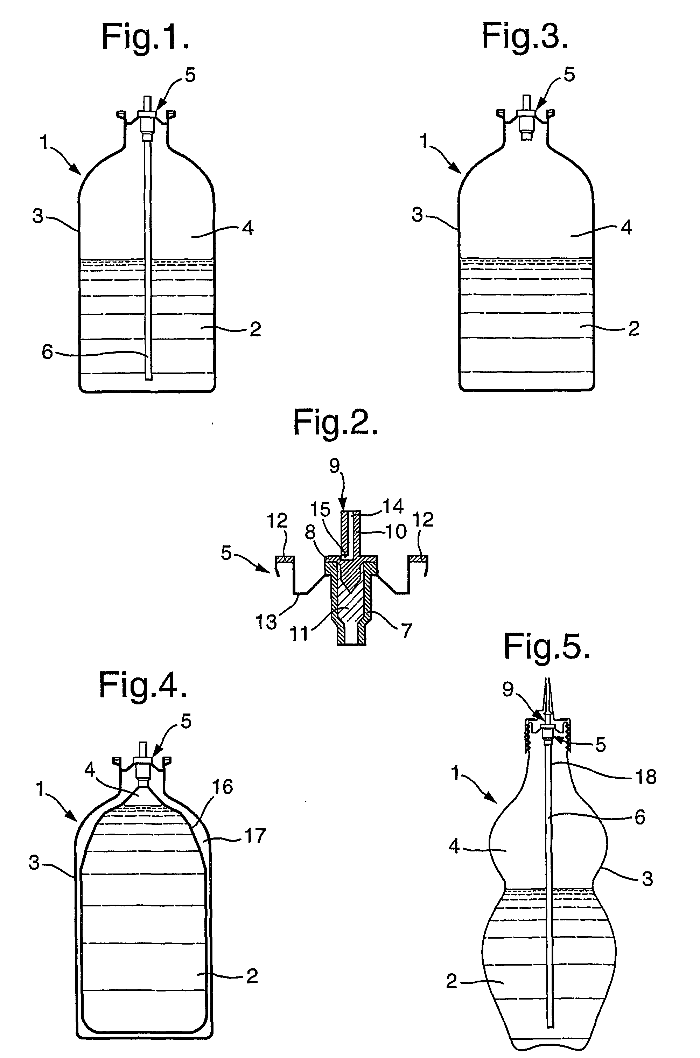

A first preferred embodiment of the beverage product of the present invention is shown in Figure 1. The beverage product comprises a dispenser 1 and a beverage 2. The dispenser 1 has a container 3 for holding the beverage. The container 3 is capable of withstanding an internal gauge pressure of at least 2.5 atmospheres. The beverage is water-based and has dissolved therein some of a sparingly soluble effervescence inducing gas (oxygen, nitrogen, nitrous oxide, hydrogen, a gaseous hydrocarbon, one or more noble gases e.g. helium, neon and krypton, or a mixture thereof) that is contained within a headspace 4 above the beverage 2. The container 3 has a neck to which is fitted a normally closed valve 5. This is preferably a high-throughput aerosol valve. A dip tube 6 extends downwardly from the valve 5, through the headspace 4 and into the beverage 2. When the valve 5 is opened and the dispenser 1 is upright the pressurised beverage 2 will be urged up the dip tube 6 and expelled from the dispenser 1 through the valve 5.

In the first preferred embodiment the dip tube 6 is rigid however it could alternatively be made of a flexible material. When the dip tube 6 is flexible it can be advantageous to attach a weight (not shown) to the end of the tube 6 so that it remains immersed in the beverage as the dispenser is tilted and the volume of the beverage drops.

The valve 5 of the first preferred embodiment is shown schematically in greater detail in Figure 2. The valve 5 has a valve housing 7, the lower end of which is attached to the upper end of the dip tube 6 as shown in Figure 1. The upper end of the housing 7 has a gasket 8 forming a valve seating that co-operates with a movable valve member 9. That valve member 9 is constituted by a stem 10. The stem 10 has a blind bore 14 which communicates with a radial port 15 extending through the wall of the tubular stem 10. The tubular stem 10 is biased by a spring 11 to a closed position in which the outer end of the radial port 15 engages the gasket 8 to prevent fluid flow from the valve housing 7 into the radial port 15 and the blind bore 14 of the stem 10. A further gasket 12 and an annular ring 13 enable the valve 5 to be sealed to the neck of the container 3 for example by crimping.

To dispense the beverage 2, the user tilts or depresses the stem 10 (or another element attached to the stem 10) so as to overcome the bias of the spring 11 moving the outer end of the radial port 15 out of sealing contact with the gasket 8 to allow the beverage to pass between into the radial port 15 and the blind bore 14 of the stem 10. The beverage 2 may be dispensed into another container for drinking but is preferably dispensed directly into the consumer's mouth.

A second preferred embodiment of the beverage product of the present invention is shown in Figure 3. The beverage product shown in Figure 3 is similar to that shown in Figure 1 except it does not have a dip tube 6. That means the dispenser must be inverted or at least significantly tilted before a consumer can drink from the dispenser.

In order to manufacture the first and second embodiments of the beverage product shown in Figures 1 and 3, the beverage 2 is placed in the container 3, which can then be flushed with the effervescence inducing gas. The container 3 is then sealed with the valve 5, and more of the effervescence inducing gas is added through the valve 5 until the pressure in the headspace 4 has reached its required value, which is preferably more than 2.5 atmospheres gauge. When the valve 5 is then opened for operation the pressure in the headspace 4 expels the beverage through the dip tube 6 and the valve 5 as an effervescent fluid. Because of this, unless the pressure is very high, a substantial amount of headspace should initially be present. Preferably, the headspace 4 occupies 10 to 80%, preferably 20 to 50%, of the volume of the container 2.

A third preferred embodiment of the beverage product of the present invention is shown in Figure 4. In this embodiment the dip tube 6 of the first preferred embodiment is replaced by a flexible bag 16 that has an upper neck that is sealed to the housing 7 of the valve 5. The bag 16 holds the beverage 2 under pressure from the sparingly soluble gas or gas mixture in the headspace 4 and also a second gas space 17. The headspace 4 can be considerably smaller than the headspace 4 of the beverage products shown in Figures 1 and 3. The second gas space 17 exists between the bag 16 and the container 3. This second gas space 17 is filled with pressurised gas through a second valve (not shown) passing through the wall or the base of the container 3. The second gas may be the same gas (or a gaseous mixture) as that which fills in the headspace 4 or may be different. This construction allows the beverage 2 to be dispensed regardless of the orientation of the container 3.

In order to manufacture the third embodiment shown in Figure 4, the beverage 2 is placed in the flexible bag 14 and the valve 5 sealed to the neck of the container 3. The effervescence inducing gas is then introduced into the headspace 4 through the valve 5. The headspace 4 may be very small, preferably less than 20% of the capacity of the bag 14. The space 17 between the bag 16 and the container 3 is pressurised after the valve 5 has been sealed to the container. The expansion of gas in the space 17 provides the driving force to expel the beverage 2 from the container 3 of the dispenser 1 through the valve 5 and into another container for drinking or directly into the consumer's mouth.

In each of the aforementioned embodiments, the pressure in the headspace 4 exceeds 2.5 atmospheres gauge, which causes the sparingly soluble gas (or mixture of sparingly soluble gases) to effervesce on discharge into the consumer's mouth or into water under test conditions. This effect is demonstrated in Examples 1 and 2.

A fourth preferred embodiment of the beverage product of the present invention is shown in Figure 5. It is very similar to the first embodiment but differs in that the container has a curvaceous shape to more ergonomically fit the hand of a consumer, and more significantly in that an aperture 18 is provided in the wall of the dip tube 6 or the valve housing 7 that is preferably close to where the dip tube 6 is attached to the valve 5. While in this embodiment the aperture 18 takes the form of a single aperture, one could alternatively have multiple apertures or use a mesh or some other form of porous material.

In use, with the dispenser 1 in the upright position, a consumer opens the valve 5 by applying downward or sideways force on valve member 9. If a non-aerosol-type valve were used the consumer might apply a torque to open it instead. On opening of the valve 5, gas is entrained through the aperture 18 in dip tube 6 into the stream of pressurised beverage 2 that flows through the dip tube 6 resulting in the expulsion of a two-phase mixture of liquid and gas that constitutes an effervescent fluid. When force is removed from the valve member 9 the valve 5 closes under the action of the spring 11, terminating the flow of the effervescent fluid from the container 3. The valve 5 can be operated in this manner as often as desired until the supply of beverage and effervescence inducing gas has been exhausted. Unlike the first preferred embodiment, the fourth preferred embodiment functions in any orientation, but it tends to work better when held upright.

An actuator is preferably attached to and forms part of the dispenser 1 of the beverage product of the present invention and includes means for moving the valve 5 from its closed position to its open position. This actuation is preferably reversible and more especially operable using the consumer's mouth and/or teeth.

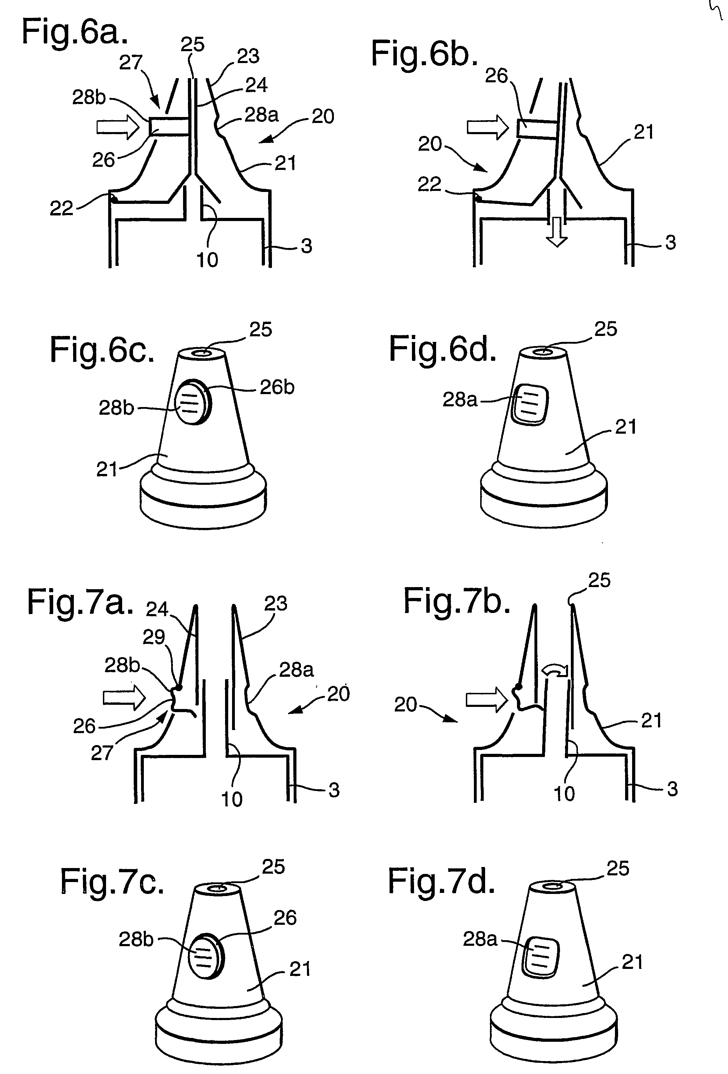

Figures 6a through to 14c depict a variety of mouth operated actuators that will now be described in detail.

A first preferred embodiment of a mouth operated actuator 20 is shown in Figures 6a, 6b, 6c and 6d. Referring to Figure 6a, which is a cross-sectional view, the actuator 20 is secured to the neck of the container 3 and/or the valve 5 of the dispenser 1 and covers the stem 10 of the aerosol valve 5. The actuator 20 has a housing 21 and a stem extension 24 that are pivotally attached to the dispenser at pivot point 22.

The upper part of the housing 21 forms a tapering nozzle section 23 that has a central passage constituted by the stem extension 24 that leads from the valve stem 10 to a nozzle outlet 25 at the upper end of the nozzle. The housing 21 and the nozzle section 23 are shaped so that when it is inserted into the mouth of a consumer, the consumer's lips engage the nozzle to provide a seal.

The actuator has a button 26 that is attached to the stem extension 24. The button 26 protrudes through the wall of the housing 21 through a circular button aperture 27. The button 26 is movable between a normal inoperative position shown in Figure 6a and a depressed operative position shown in Figure 6b. In the position of the button illustrated in Figure 6a, the valve is closed so no effervescent fluid can escape from the container 3. In the position of the button illustrated in Figure 6b, the button 26 has displaced the valve stem 10, pressing it down vertically by means of the stem extension 24 rotating about the pivot point 22 to open the valve 5. Thus the valve stem 10 is linearly displaceable in this embodiment. The area of the nozzle opposite to the button 26 is formed with a textured surface 28a, e.g. by the integral moulding of recesses or projections or by the application of a piece of non-slip material. A similar textured surface may be provided on the surface 28b of the button 26.

Figures 6c and 6d show front and rear exterior views of the mouth operated actuator shown in Figures 6a and 6b.

In use a consumer grasps the outer case of the dispenser 1 and inserts the nozzle section 23 of the mouth operated actuator into his or her mouth. To open the valve and thus dispense the effervescent fluid directly into the mouth, the consumer applies a biting action on the textured surface 28b on the button 26 and the textured area 28a on the area opposite the button 26. That action depresses the button 26 in the direction of movement illustrated by the solid arrow in Figures 6a and 6b. The textured surfaces 28a and 28b prevent the consumer's teeth from slipping. The button 26 reverts to its normal extended position (and the valve to its closed position) when the compressive force applied across the nozzle as a result of the biting action is removed.

A second preferred embodiment of a mouth operated actuator is shown in Figures 7a, 7b, 7c and 7d. In this embodiment the valve is tilt operable. The button 26 of the actuator 20 shown in Figures 7a and 7b is not attached to the stem extension 24 but is attached by pivot point 29 to the housing 21. When the button 26 is engaged by the consumer's teeth it pivots about the pivot point 29 and this displaces the valve stem 10, thereby opening the valve so as to dispense the effervescent fluid directly into the consumer's mouth. The stem extension 24 may be made of a flexible material, so that it can flex and thereby maintain a good seal with the valve stem 10 during operation.

The external appearance of the second preferred embodiment of the mouth operated actuator of Figures 7a and 7b is shown in Figures 7c and 7d, as front and rear views respectively.

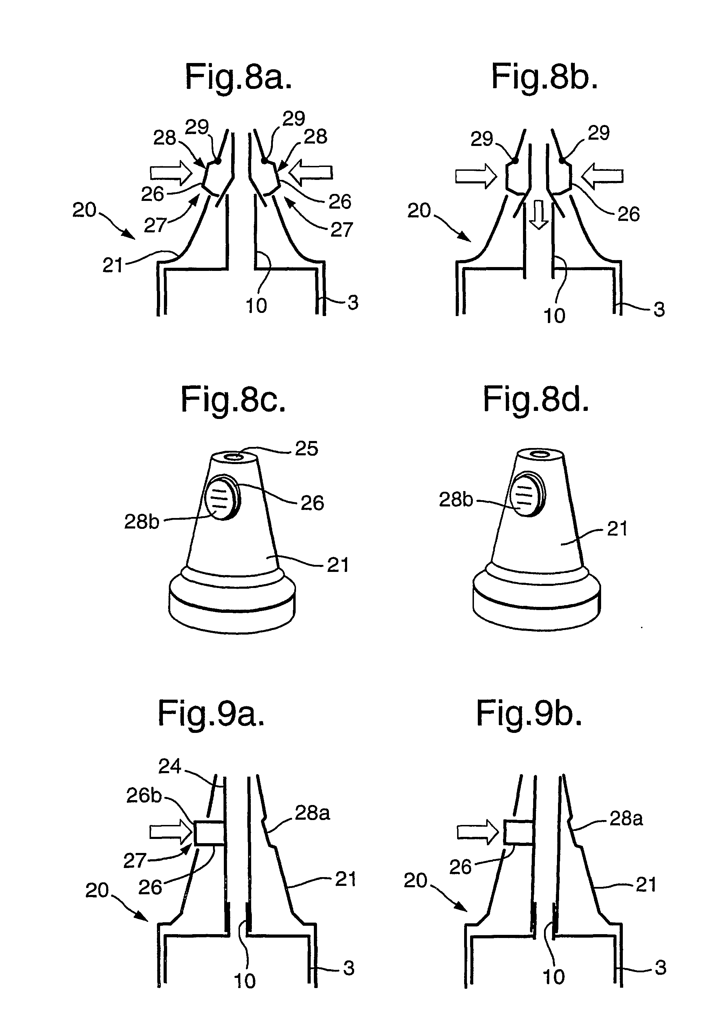

A third preferred embodiment of a mouth operated actuator is shown in Figures 8a, 8b, 8c and 8d. In this embodiment the actuator 20 has two depressible buttons 26 on opposite sides of the housing 21, each button being pivotally connected to the housing 21 at a pivot point 29 like the button 26 of the second preferred embodiment of the actuator shown in Figures 7a and 7b. When the two buttons are depressed (as seen in Figure 7b), they pivot about hinge points 29 and engage a downwardly diverging frusto-conical shape at the end of the stem extension 10, so as to cause the stem 10 to move towards the container opening the valve 5, thereby dispensing the effervescent fluid. Thus, the stem 10 is linearly displaceable in this embodiment.

Figures 8c and 8d show, in front and rear views respectively, the external appearance of the nozzle of the dispenser of Figures 8a and 8b.

A fourth preferred embodiment of a mouth operated actuator is shown in Figures 9a and 9b. In this embodiment the button 26 is mounted on the stem extension 24 and when it is depressed (as seen in Figure 9) it tilts the stem extension 24 and opens the tilt-operated valve thereby dispensing the effervescent fluid. The external appearance is the same as that of the first preferred embodiment of the actuator shown in Figures 6c and 6d.

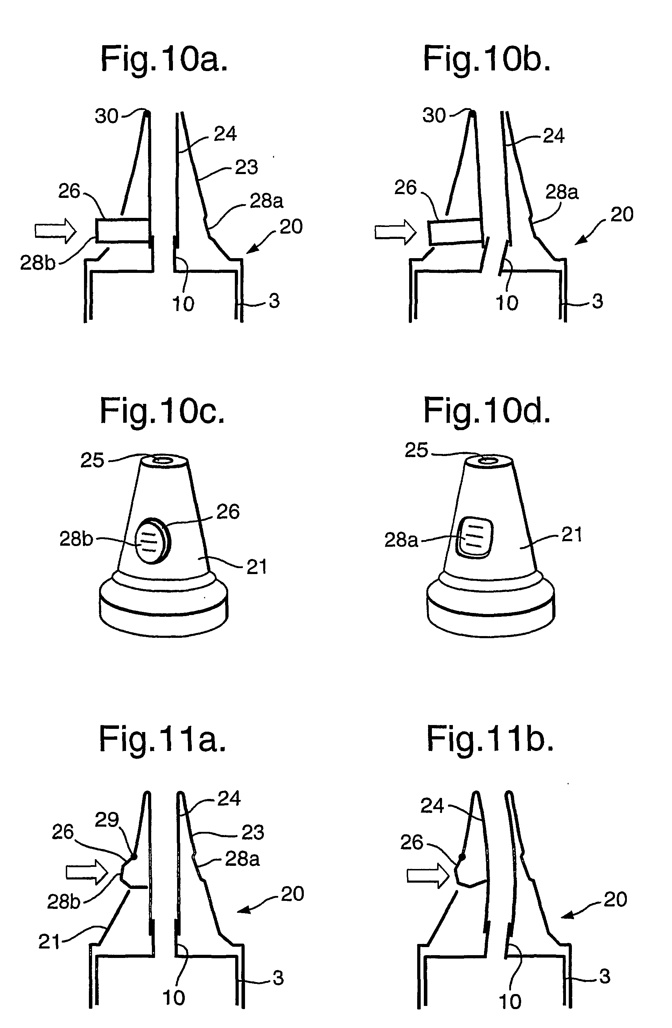

A fifth preferred embodiment of a mouth operated actuator is shown in Figures 10a, 10b, 10c and 10d. In this embodiment the button 26 can be lower down on the housing 21, and when depressed, the stem extension 24 pivots about a pivot point 30 near the top of the housing 21 causing the tilt-operated valve to open.

Figures 10c and 10d show the external appearance of the actuator, in front and rear views respectively.

Alternatively, the top of the stem extension 24 can be firmly fixed to the top of the housing 21, and the stem extension 24 and the housing 21 can be made of a flexible material. In such a variation, the button 26 attached to the stem extension 24 is typically higher up, and when the button is depressed, it causes the stem extension 24 to flex and at the same time the valve stem 10 to tilt, thereby opening the valve 5. The flexibility of the stem extension 24 allows a good seal to be maintained between the valve stem 10 and the stem extension 24 during operation.

A sixth preferred embodiment of a mouth operated actuator is shown in Figures 11a and 11b. In this embodiment the actuator has a flexible stem extension 24. Depressing button 26 causes the stem extension 24 to flex, thereby tilting the valve stem 10 and opening the valve. The button 26 is pivotally attached to the housing 21 at pivot point 29.

The external appearance of the sixth preferred embodiment of actuator is the same as that of the second preferred embodiment of actuator as shown in Figures 7c and 7d.

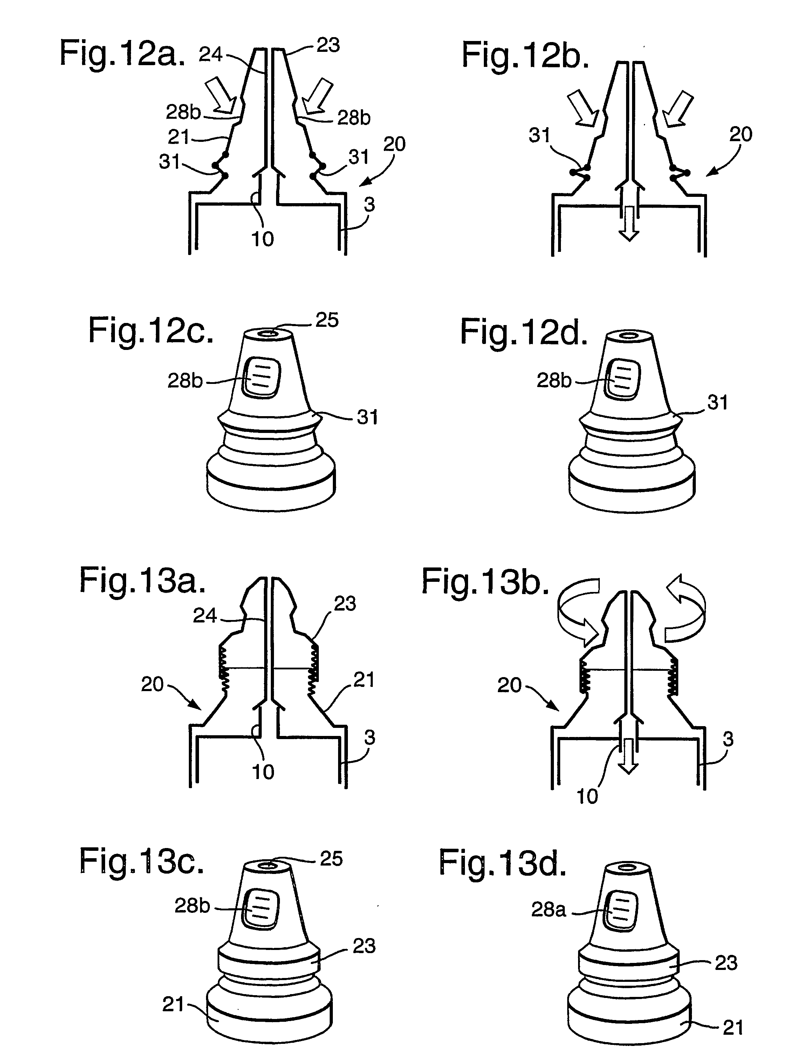

A seventh preferred embodiment of a mouth operated actuator is shown in Figures. 12a, 12b, 12c and 12d. In this embodiment the consumer grips the housing 21 with his or her teeth and applies a downward force in the direction of the solid arrows shown in Figures 12a and 12b. The housing 21 has a concertina formation 31 that allows the upper part of the housing 21 to be moved towards the container. The downward force applied to the housing 21 is transferred to the valve stem 10 so as to open the valve, thereby dispensing the effervescent fluid.

Figures 12c and 12d illustrate the external appearance of the seventh preferred embodiment of the actuator in front and rear views respectively and show the aforementioned concertina formation 31 of the housing 21.

An eighth preferred embodiment of a mouth operated actuator is shown in Figures 13a, 13b, 13c and 13d. In this embodiment the nozzle section 23 is a separate part of the actuator 20 that is threaded onto the housing 21 to provide for relative rotation of the nozzle section 23 and the remainder of the dispenser 1. In use the consumer grips the nozzle section 23 between his or her teeth and then grasps the housing 21 (where it surrounds the container) so as to rotate the container 3 relative to the nozzle section 23. This rotation (indicated by the solid arrows in Figure 13b) moves the valve stem 10 to open the valve and thereby dispense the effervescent fluid directly into the consumer's mouth.

Figures 13c and 13d illustrate the external appearance of the eighth preferred embodiment of actuator, in front and rear views respectively.

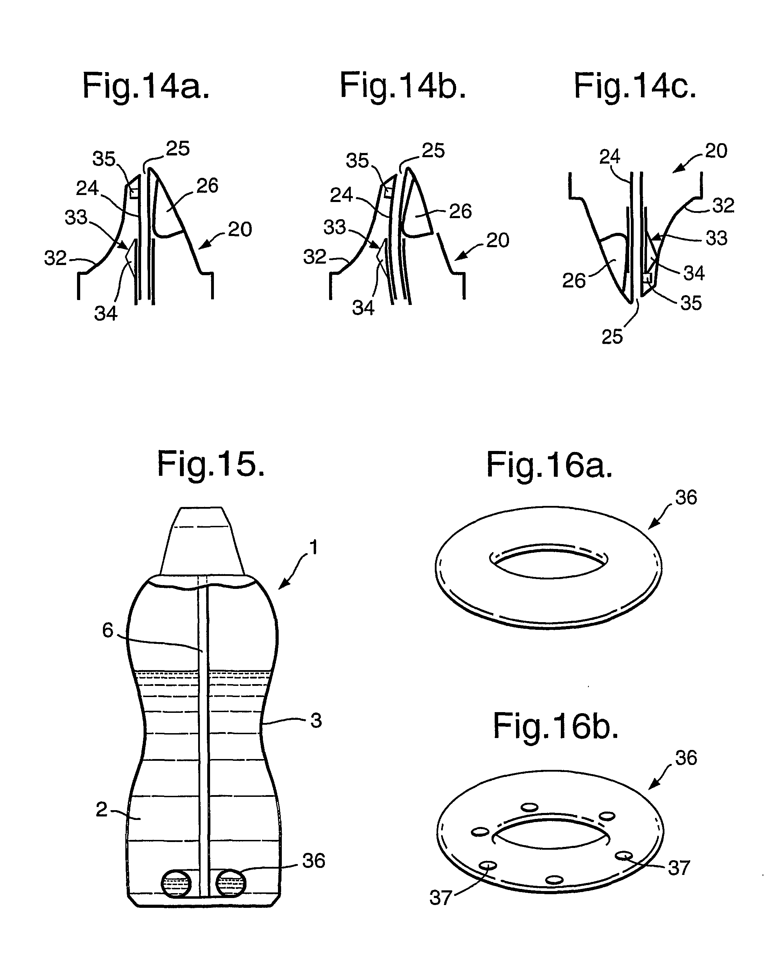

A ninth preferred embodiment of a mouth operated actuator is shown in Figures 14a, 14b and 14c. In this embodiment one side of the actuator has a concave recess 32 that is designed to contact the lower lip of a consumer. But more importantly the actuator 20.has a slidable plug 33 that is formed around the stem extension 24 and prevents the valve from being opened when the dispenser is inverted.

The actuator is similar to that of the sixth preferred embodiment shown in Figures 11a and 11b in that the stem extension 24 is flexible and the valve 5 is opened by applying pressure on the button 26, which causes the stem extension 24 to flex and thereby tilt the valve stem 10. The slidable plug 33 has no effect when the dispenser is used in a substantially upright position (see Figures 14a and 14b). However, when the dispenser is inverted (see Figure 14c) the slidable plug 33 slides down the stem extension 24 towards the nozzle outlet 25 and a wedge 34 that forms part of the plug 33 provides sufficient resistance to prevent the consumer from flexing the stem extension 24 when he or she tries to depress the button 26. A stopper 35 is provided on the exterior surface of the stem extension 24 adjacent to the nozzle 23 to restrict the movement of the plug 33 when the dispenser is inverted.

In all embodiments of the mouth operated actuator, the delivery of liquid is directly into the consumer's mouth, under the control of the consumer's bite. The consumer's fingers do not need to touch any part of the nozzle, thereby reducing the chance of the nozzle becoming contaminated. If desired a protective and replaceable cap (not shown) can cover the nozzle.

If desired the beverage product of the present invention can include a widget that contains the sparingly soluble gas or gas mixture and/or a flavour concentrate that is released into the container when the dispenser is being used.

"Widget" has become a term of art, at least in the brewing industry, to describe a device that releases pressurised gas into a can of beer when the can is opened thereby producing a creamy head typical of draught beer. The first widget or in-can-draught system is described in United Kingdom patent specification GB 2183592 A (Arthur Guinness Son and Company (Dublin) Limited). Various other versions have since become commercially available.

A tenth preferred embodiment of the beverage product of the present invention includes a widget-type device, herein just called a "widget". The embodiment is shown in Figure 15 and the widget is shown in more detail in Figures 16a and 16b.

The tenth embodiment of the beverage product shown in Figure 15 is much like the first embodiment shown in Figure 1 in that it comprises a dispenser 1 for containing a beverage 2 in a container 3. The dispenser has a valve 5 (not shown) with a dip tube 6. In this embodiment a toroidal widget 36 is suspended above the base of the container 3 around the inlet of the dip tube 6. The widget is shown in a perspective view from above in Figure 16a and in a perspective view from below in 16b. Perforations 37 are formed in the downward facing surface of the widget 36, as seen in Figure 16b. Naturally the perforations could take other forms; a single perforation could be sufficient or the widget could include a mesh or some other porous material. In the case where the widget 36 shown is filled with just gas the perforations 37 can face in any orientation.

The widget 36 contains the sparingly soluble effervescence inducing gas or gas mixture under pressure and remains there while the contents of the container 3 is pressurised. In use when a consumer opens the valve for the first time, the pressure within the container drops as some of the pressurised gas within the headspace is dispensed. The sparingly soluble gas or gas mixture escapes from the widget 36 through the perforations 37. With the sparingly soluble gas or gas mixture free within the container the effervescent fluid will be created as previously described, which can be poured into a drinking vessel or directed straight into the consumer's mouth.

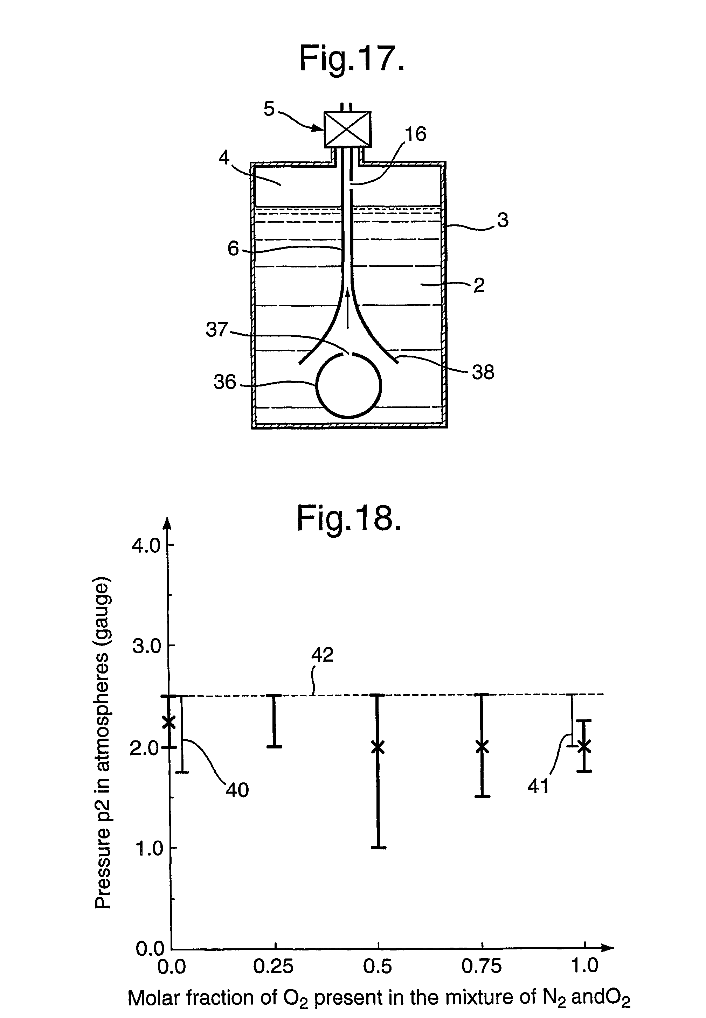

An eleventh preferred embodiment of the beverage product of the present invention that also includes a widget is shown in a cross-section in Figure 17. In this embodiment the widget 36 is substantially spherical in shape and includes at least one perforation 37 that is located to discharge its contents upwards into a dip tube 6. The dip tube 6 has a splayed or flared inlet 38 to catch the discharging contents of the widget 36. The dip tube 6 optionally has an aperture 16 much like the fourth preferred embodiment of the beverage product.

If desired the widget, such as the widget shown in Figure 16, a can contain a concentrated flavour together with the sparingly soluble gas or gas mixture. In this case the flavour is expelled from the widget close to the end of the dip tube and so is taken together with the beverage. This arrangement can be used to keep labile flavours separate from the gas in the headspace above the beverage.

### EXAMPLES

The beverage product of the present invention will now be described with reference to the following examples.

### EXAMPLE 1

### Determination of filling pressure for effective effervescence

The following experiment was conducted to determine the filling pressure that is required to produce the desired effervescence.

Gas samples containing oxygen and nitrogen in various proportions (molar fraction of O₂ of 0.0, 0.25, 0.5, 0.75, 1.0) were prepared and used to fill a beverage dispenser as shown in Figure 3 using a variety of filling pressures. The dispensers were tested to see whether they produced a fine smoke-like effervescent fluid.

The samples were prepared and tested in duplicate to check reproducibility. All temperatures given were measured using a thermocouple probe.

For each sample, the following protocol was observed:
(1) 300 ml of tap water at 10 ± 0.5° C was poured into a strong polyethylene terephthalate ("PET") bottle of 28 g mass and 520 ml brimful capacity. The bottle was then left to equilibrate in a temperature-controlled bath also at 10 ± 0.5° C.
(2) The proportion of oxygen gas in the oxygen-nitrogen mixture had been decided on in advance, and whichever gas was to be at a higher partial pressure in the mixture is called "gas 1". The other gas will be referred to as "gas 2".
(3) The headspace above the water in the bottle was flushed with gas 1 for 5 to 10 seconds, and then the aerosol valve was placed quickly over the neck of the bottle, thus sealing the bottle from any loss of gas 1 or influx of air. The aerosol valve was then held firmly in place by means of a screw cap with a small hole cut in the centre in order to allow the stem of the valve to be accessible.
(4) More of gas 1 was then added from the regulated supply of gas 1 through the stem of the aerosol valve until a pressure "p1" was reached. The bottle was then shaken to ensure that the gas inside was at the same temperature as the liquid, and the bottle was topped up to the pressure p1 with more of gas 1. This was necessary because the temperature of the gas when first injected into the bottle is somewhat higher than 10° C.
(5) Gas 2 was then added through the stem of the valve from a regulated supply of gas 2 until a pressure "p2" was reached. Again the bottle was shaken, and then topped up with more of gas 2 to reach the pressure p2 again. Both p1 and p2 are measured in atmospheres gauge from the pressure gauge on the regulated supplies of the two gases.
(6) The sealed bottle was then placed in a temperature controlled bath at 10 ± 0.5° C for 5 minutes to equilibrate, the sample being shaken every 30 seconds to ensure good contact between the gas mixture and the water in the bottle.
(7) The bottle was then discharged under water that was at a temperature of 21 ± 1° C. The stream of discharged fluid was observed as it left the bottle against a black plastic sheet, and it was noted whether or not there was a visible, fine, smoke-like effervescence.

The results of this experiment are summarised in Figure 18 as a plot of the molar fraction of oxygen present in the mixture (horizontal axis) against the gauge pressure p2 (vertical axis).

Each error bar in Figure 18 runs from a lower value of p2, which is the highest pressure at which the effervescence is definitely not seen, to a higher value of p2, which is the lowest pressure p2 at which effervescence is definitely seen. The true critical pressure thus lies somewhere on the error bar. If there is a pressure at which there is some doubt as to whether effervescence can be seen or not, this is marked as an "x" on the error bar. These "x" marks thus represent the best estimate of the position of the critical filling pressure.

The graph has two results drawn with a lighter weight of line and marked 40 and 41. These results are shown slightly displaced in the horizontal direction, for the sake of clarity. Thus the true molar fraction of oxygen in the mixture for result 40 is 0.0, and for result 41 it is 1.0. The results labelled 40 and 41 are for a tilt operated aerosol type valve, while all the other results are for a push-down operated aerosol type valve. These results show that there is no significant difference between the types of valves used.

The results show that fine smoke-like effervescence is produced from a beverage that has an initial pressure in the headspace of 2.5 atmospheres or more, for all mixtures of oxygen and nitrogen.

### EXAMPLE 2

### Effervescence obtained using gas mixtures

The following experiments were conducted to determine whether the desired effervescence is obtained using a gas mixture that contains a gas that is sparingly soluble in water as well as a gas that is soluble in water.

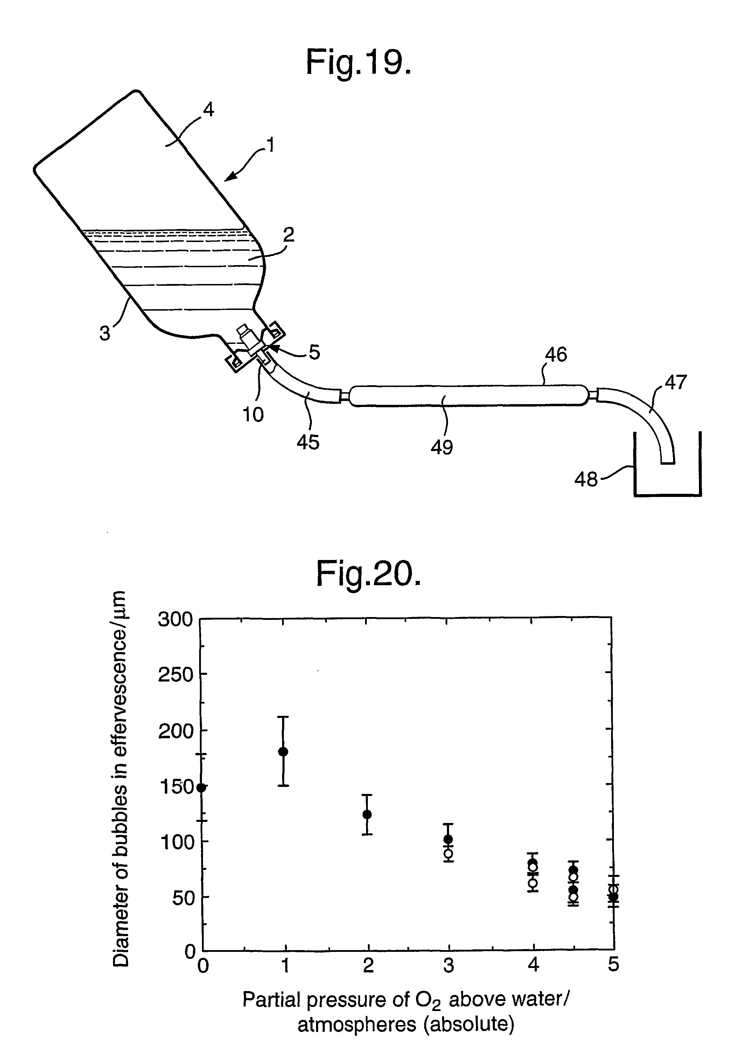

Twelve experiments were conduced in accordance with the following protocol. The experimental set-up is shown in Figure 19 and involves using the second preferred embodiment of the beverage product shown in Figure 3. All temperatures given were measured using a thermocouple probe.
(1) 300 ml of tap water at 10 ± 0.5°C was poured into a strong polyethylene terephthalate ("PET") container (labelled 3 in Figure 19) of 28 g mass and 520 ml brimful capacity. The container 3 was then left to equilibrate in a temperature-controlled bath also at 10 ± 0.5° C.
(2) Twelve experiments were performed, referred to in the following by letters "A" to "L" inclusive. These experiments differed in the way gas was added to the container 3. In all experiments the valve 5 of the dispenser 1 shown in Figure 19 was secured to the container 3 by means of a screw cap. The screw cap had a hole through which the valve stem 10 could extend but gave a gas-tight seal.
   In Experiment A oxygen was added through the valve stem 10 until the pressure inside the headspace 4 was 4 atmospheres gauge. The container 3 was shaken, and then topped up with oxygen in the same way until the pressure inside was once more 4 atmospheres gauge.
   In Experiment B the headspace 4 of the container 3 was flushed with carbon dioxide from a regulated supply of the gas, for 5 seconds, to clear the headspace 4 of air. The container 3 was then sealed and CO₂ was added at 4 atmospheres from the regulated supply through the valve stem 10. While the gas was added, the container 3 was constantly shaken for 20 seconds, so that the carbon dioxide was close to equilibrium with the water 40.
   In Experiment C the procedure of Experiment A was followed except before the container 3 was sealed the headspace 4 was flushed with oxygen for 5 seconds to remove the air from the headspace 5.
   In Experiments D and J the container 3 was flushed with oxygen and sealed as in Experiment C. Oxygen gas was then added through the valve stem 10 up to a pressure of 3 atmospheres gauge in Experiment D and up to 3.5 atmospheres gauge in Experiment J. The container 3 was then shaken and topped up to 3 atmospheres gauge in Experiment D and 3.5 atmospheres gauge in Experiment J with oxygen. In both cases carbon dioxide was then added through the valve stem 10 with continuous shaking for 20 seconds up to a final pressure of 4 atmospheres gauge.
   In Experiment E the headspace was flushed for 20 seconds with CO₂, while the container 3 was shaken, so that the CO₂ was close to equilibrium with the beverage 2 (i.e. water). The container 3 was then sealed and oxygen added through the valve stem 10 to a pressure of 4 atmospheres gauge. The container 3 was shaken, and topped up to 4 atmospheres gauge with oxygen.
   In Experiments F, H and I the container 3 was flushed for 5 seconds with CO₂ then sealed. Carbon dioxide was then added through the valve stem 10, with shaking, for 20 seconds. The final pressure of CO₂ was chosen to be 1, 2 and 3 atmospheres gauge for the Experiments F, H and I respectively. The containers were then topped up with oxygen to 4 atmospheres gauge in all cases, shaken and topped up to 4 atmospheres gauge again with oxygen. In Experiments G and K (which are identical) the container 3 was flushed with CO₂ for 5 seconds to expel any air present, but was not shaken. The container 3 was then sealed and then oxygen was added through the valve stem 10 up to a pressure of 4 atmospheres gauge. The container 3 was then shaken, and topped up with oxygen to 4 atmospheres gauge. In Experiment L the procedure of Experiment C was followed except nitrogen was used in place of oxygen at all points.
(3) At this stage of the procedure, the containers were all filled to 4 atmospheres gauge pressure, but with different mixtures of gases.
(4) In each experiment, the container 3 was allowed to equilibrate in a temperature-controlled bath at 18 ± 0.5° C, for 5 minutes, with shaking every 30 seconds (as in Experiment 1).
(5) In each case the container 3 was inverted, and a small fraction of its contents was discharged through a first flexible rubber tube 45, which made a good seal with the valve stem 10. The rubber tube 45 was connected to a glass pipe 46, which was fixed horizontally. Most of the length of the glass pipe consisted of a flat-sided pipe of height 9 mm (vertically), width 5 mm and length 15 cm. The other end of the glass pipe was connected to a second flexible rubber tube 47, which emptied into a beaker 48. The function of the flat-sided pipe was to enable the liquid discharged from the container 3 to be clearly seen and imaged.
   Whilst the liquid was being discharged, a video camera was used to record the appearance of the discharged fluid a distance 15 cm from valve 3. This viewing region is labelled 49 in Figure 19. A grid with lines separated by 1 mm was placed behind the glass pipe to allow distances to be measured accurately from the video images.
(6) After a short discharge through the valve, effervescence was observed in the viewing region 49 of the glass pipe 46 using the video camera. This consisted of bubbles that rose in the glass pipe 46. When they reached the top of the glass pipe, the bubbles coalesced into larger bubbles. However, while they were rising in the now stationary fluid, their rise velocities could be measured by counting the number of video frames required for the bubbles to rise 1 mm. These velocities were converted into bubble sizes using Stokes' law for the rising of a sphere in a liquid of known density and viscosity (in our case, water at 18° C).

The results of these twelve experiments are summarised in Table 1 below. The table refers to "Single" and Multiple" rise times.
The "single" rise time is the rise velocity of individually imaged bubbles. Whereas the "Multiple" rise time is the rise velocity of the surface of the cloud of effervescence.

**TABLE 1**

| **Results of Experiment 2** | | | | |
|---|---|---|---|---|
| Expt | Partial pressure of oxygen | Type of rise Velocity measured | No. of readings taken | Bubble diameter |
| A | 4.2 | Single | 9 | 48 ± 17 |
| A | 4.2 | Multiple | 6 | 39 ± 3 |
| B | 0.0 | Single | 9 | 148 ± 30 |
| C | 5.0 | Single | 14 | 49 ± 10 |
| C | 5.0 | Multiple | 3 | 55 ± 12 |
| D | 4.0 | Single | 33 | 80 ± 8 |
| D | 4.0 | Multiple | 8 | 75 ± 5 |
| E | 4.0 | Single | 25 | 61 ± 8 |
| E | 4.0 | Multiple | 11 | 61 ± 7 |
| F | 3.0 | Single | 37 | 101 ± 13 |
| F | 3.0 | Multiple | 7 | 88 ± 7 |
| G | 4.5 | Single | 29 | 51 ± 11 |
| G | 4.5 | Multiple | 9 | 48 ± 5 |
| H | 2.0 | Single | 28 | 123 ± 18 |
| I | 1.0 | Single | 12 | 181 ± 31 |
| J | 4.5 | Single | 52 | 72 ± 8 |
| J | 4.5 | Multiple | 11 | 66 ± 5 |
| K | 4.5 | Single | 45 | 54 ± 11 |
| K | 4.5 | Multiple | 10 | 49 ± 5 |
| L | 0.0 | Single | 11 | 31 ± 2 |
| L | 0.0 | Multiple | 12 | 28 ± 3 |

The results for the mixtures of oxygen and carbon dioxide (that is to say, for experiments B, C, D, E, F, G, H, J, and K) are plotted giving the graph shown in Figure 20. In Figure 20, the results from "Single" bubble rise times are plotted as filled circles, and the results from "Multiple" bubble rise times are plotted as open circles.

It is clear from these results that the bubble size of the effervescence increases from the value for pure oxygen if a large fraction of carbon dioxide is present in the gas mixture.

Experiments A and L show that fine effervescence (like that produced by pure oxygen) is also produced for another sparingly soluble gas (nitrogen), and also a mixture of nitrogen and oxygen.

Experiments B to K inclusive show that if the partial pressure of the soluble gas (carbon dioxide) does not exceed 1 atmosphere absolute (that is to say, if the partial pressure of the sparingly soluble gas (oxygen in this case) is greater than or equal to the total absolute pressure above the beverage, minus one atmosphere), then the effervescence size does not differ significantly from the value for pure oxygen.

In other words, the fine smoke-like effervescence produced by mixtures of nearly insoluble gases that gives a smooth (as opposed to prickly) sensation to the consumed beverage, is preserved in the presence of admixtures of a soluble gas. That is provided that the partial pressure (absolute) of the soluble gas above the beverage in the container does not exceed atmospheric pressure. That is to say, provided the soluble gas is not overly supersaturated at the serving pressure of 1 atmosphere absolute pressure.

## Claims

1. A beverage product comprising a dispenser (1) and a beverage (2) in which the dispenser has a container (3) for holding the beverage and a valve (5) which is biased to a position where it seals the container but which is openable to enable the beverage to be dispensed from the container and in which the beverage is a liquid having a sparingly soluble effervescence inducing gas dissolved therein,the beverage product being **characterised in that** the beverage is held under a gaseous pressure in the head spaced (4) above the liquid beverage in the container that is sufficient to cause the beverage to be discharged from the dispenser as an effervescent fluid when the valve is open.

2. A beverage product according to claim 1 wherein the beverage is held under a gaseous pressure in the headspace of at least 2.5 atmospheres gauge at 5 to 15° C.

3. A beverage product according to claim 1 or 2, wherein the sparingly soluble effervescence inducing gas is selected from the group consisting of oxygen, nitrogen, nitrous oxide, hydrogen, noble gases, gaseous hydrocarbons and mixtures thereof.

4. A beverage product according to claim 3, wherein the sparingly soluble effervescence inducing gas is oxygen.

5. A beverage product according to any preceding claim, wherein the beverage has dissolved therein a further gas which is more soluble in water than said sparingly soluble effervescence inducing gas and which has a partial pressure in the headspace not exceeding 1 atmosphere absolute at 18° C.

6. A beverage product according to claim 5, wherein the further gas is carbon dioxide.

7. A beverage product according to claim 1 wherein the amount of liquid beverage and effervescence inducing gas inside the container is such that several portions of effervescent fluid can be dispensed over a period of time by successive openings of the valve.

8. A beverage product according to any preceding claim wherein the valve is an aerosol valve.

9. A beverage product according to any preceding claim, wherein the beverage is water or a tea or coffee based beverage.

10. A beverage product according to any preceding claim, wherein the dispenser includes actuator means (20) in the outlet portion of the dispenser which are operable to open the valve to release the effervescent fluid from the container, the actuator means being shaped and positioned for engagement by a user's mouth or teeth to cause or enable release of liquid directly into the user's mouth.

11. A beverage product according to claim 10, wherein the actuator means includes a button (26) mounted in the outlet portion, the button being movable between a valve-closed position and a valve-open position to which it can be moved by a biting action applied to the outlet portion.

12. A beverage product according to any preceding claim, wherein the container has a dip tube (6) that is attached to the valve inside the container and extends into the interior of the container so that the end of the dip tube is below the level of the beverage when the container is upright so that the effervescent fluid is urged to pass through the dip tube when the valve is open by the pressure of the gas in the headspace.

13. A beverage product according to claim 12, wherein the dip tube has an aperture (18) which communicates between the headspace above the beverage in the container and the interior of the dip tube enabling gas from the headspace to be entrained in fluid being dispensed through the dip tube when the valve is open..

14. A beverage product according to claim 13, wherein the quantity of gas expelled from the container when the valve is opened is greater than 0.5 cubic centimetres per 1 cubic centimetre of liquid beverage when measured at atmospheric pressure and 20° C.

15. A beverage product according to claim 1, wherein the headspace within the container comprises between 10% and 80% of the volume of the container.

16. A beverage product according to claim 1 that includes means for preventing opening of the valve when the dispenser is inverted.

17. A beverage product according to claim 1 wherein the sparingly soluble effervescence inducing gas is contained in a widget (36) that releases its contents into the container when the valve is opened.

18. A beverage product according to claim 16 wherein the widget contains a concentrated flavour that is released into the container when the valve is opened.

19. A method for producing an effervescent beverage fluid comprising placing a liquid beverage in a container, sealing the container, introducing a sparingly soluble effervescence inducing gas into the container so that the gaseous pressure in the headspace of the container is sufficient to cause the beverage to be discharged from the dispenser as an effervescent fluid when the valve is open, and opening that valve to discharge the beverage as said effervescent fluid.

## Patentansprüche

1. Getränkeprodukt, welches einen Spender (1) und ein Getränk (2) umfasst, wobei der Spender einen Behälter (3) zum Halten des Getränks und ein Ventil (5) hat, welches zu einer Position ausgerichtet ist, wo es den Behälter versiegelt, aber welches zu öffnen ist, um es dem Getränk zu ermöglichen, von dem Behälter abgegeben zu werden, und worin das Getränk eine Flüssigkeit mit einem darin gelösten schwer löslichen, Sprudeln herbeiführenden Gas ist, wobei das Getränkeprodukt **dadurch gekennzeichnet ist, dass** das Getränk unter einem Gasdruck im Freiraum (4) oberhalb des flüssigen Getränks im Behälter gehalten wird, der ausreichend ist, um das Getränk zu veranlassen, aus dem Spender als eine sprudelnde Flüssigkeit ausgebracht zu werden, wenn das Ventil offen ist.

2. Getränkeprodukt gemäß Anspruch 1, worin das Getränk unter einem Gasdruck im Freiraum von mindestens 2,5 Atmosphärenüberdruck bei 5 bis 15°C gehalten wird.

3. Getränkeprodukt gemäß Anspruch 1 oder 2, worin das schwer lösliche, Sprudeln herbeiführende Gas ausgewählt wird aus der Gruppe bestehend aus Sauerstoff, Stickstoff, Distickstoffoxid, Wasserstoff, Edelgasen, gasförmigen Kohlenwasserstoffen und Gemischen daraus.

4. Getränkeprodukt gemäß Anspruch 3, worin das schwer lösliche, Sprudeln herbeiführende Gas Sauerstoff ist.

5. Getränkeprodukt gemäß einem vorhergehenden Anspruch, worin das Getränk ein weiteres Gas darin gelöst hat, welches in Wasser löslicher ist, als besagtes schwer lösliches, Sprudeln herbeiführendes Gas, und welches einen Teildruck im Freiraum hat, welcher 1 Atmosphäre absolut bei 18°C nicht überschreitet.

6. Getränkeprodukt gemäß Anspruch 5, worin das weitere Gas Kohlendioxid ist.

7. Getränkeprodukt gemäß Anspruch 1, worin die Menge an flüssigem Getränk und Sprudeln herbeiführendem Gas innerhalb des Behälters so ist, dass mehrere Portionen sprudelnder Flüssigkeit über einen Zeitraum durch aufeinander folgende Öffnungen des Ventils ausgeteilt werden können.

8. Getränkeprodukt gemäß einem vorhergehenden Anspruch, worin das Ventil ein Aerosolventil ist.

9. Getränkeprodukt gemäß einem vorhergehenden Anspruch, worin das Getränk Wasser oder ein auf Tee oder Kaffee basierendes Getränk ist.

10. Getränkeprodukt gemäß einem vorhergehenden Anspruch, worin der Spender ein Betätigungsmittel (20) im Auslassteil des Spenders einschließt, welches bedienbar ist, um das Ventil zu öffnen, um die sprudelnde Flüssigkeit aus dem Behälter freizugeben, wobei das Betätigungsmittel zum Einschalten durch den Mund oder die Zähne eines Verwenders geformt und positioniert ist, um die Freigabe von Flüssigkeit direkt in den Mund des Verwenders zu veranlassen oder zu ermöglichen.

11. Getränkeprodukt gemäß Anspruch 10, worin das Betätigungsmittel einen in der Auslassposition montierten Knopf (26) einschließt, wobei der Knopf zwischen einer Ventil-geschlossenen Position und einer Ventil-offenen Position bewegbar ist, zu welcher er durch eine Beißhandlung bewegt werden kann, welche auf den Auslassteil angewendet wird.

12. Getränkeprodukt gemäß einem vorhergehenden Anspruch, worin der Behälter ein Steigrohr (6) hat, das am Ventil innerhalb des Behälters befestigt ist und sich in das Innere des Behälters erstreckt, so dass sich das Ende des Steigrohrs unterhalb des Pegels des Getränks befindet, wenn der Behälter aufrecht ist, so dass die sprudelnde Flüssigkeit durch den Druck des Gases im Freiraum dazu gedrängt wird, durch das Steigrohr zu passieren, wenn das Ventil offen ist.

13. Getränkeprodukt gemäß Anspruch 12, worin das Steigrohr eine Öffnung (18) hat, welche zwischen dem Freiraum oberhalb des Getränks im Behälter und dem Inneren des Steigrohrs kommuniziert, was es Gas aus dem Freiraum ermöglicht, in Flüssigkeit mitgeführt zu werden, welche durch das Steigrohr ausgeteilt wird, wenn das Ventil offen ist.

14. Getränkeprodukt gemäß Anspruch 13, worin die Menge an Gas, welche aus dem Behälter ausgestoßen wird, wenn das Ventil geöffnet wird, größer als 0,5 Kubikzentimeter pro 1 Kubikzentimeter flüssiges Getränk ist, wenn bei atmosphärischem Druck und 20°C gemessen wird.

15. Getränkeprodukt gemäß Anspruch 1, worin der Freiraum innerhalb des Behälters zwischen 10% und 80% des Volumens des Behälters umfasst.

16. Getränkeprodukt gemäß Anspruch 1, das Mittel zum Verhindern von Öffnen des Ventils einschließt, wenn der Spender umgekehrt wird.

17. Getränkeprodukt gemäß Anspruch 1, worin das schwer lösliche, Sprudeln herbeiführende Gas in einem Widget (36) enthalten ist, das seinen Inhalt in den Behälter freigibt, wenn das Ventil geöffnet wird.

18. Getränkeprodukt gemäß Anspruch 16, worin das Widget einen konzentrierten Geschmacksstoff enthält, der in den Behälter freigegeben wird, wenn das Ventil geöffnet wird.

19. Verfahren zum Herstellen einer sprudelnden Getränkeflüssigkeit, welches umfasst: Platzieren eines flüssigen Getränks in einen Behälter, Versiegeln des Behälters, Einführen eines schwer löslichen, Sprudeln herbeiführenden Gases in den Behälter, so dass der Gasdruck im Freiraum des Behälters ausreichend ist, das Getränk zu veranlassen, als eine sprudelnde Flüssigkeit aus dem Spender ausgebracht zu werden, wenn das Ventil offen ist, und Öffnen dieses Ventils, um das Getränk als besagte sprudelnde Flüssigkeit auszubringen.

## Revendications

1. Produit de boisson comprenant un distributeur (1) et une boisson (2), dans lequel le distributeur possède un récipient (3) permettant de tenir la boisson et une valve (5) qui est inclinée en une position lui permettant d'assurer l'étanchéité du récipient mais qui peut être ouverte afin de permettre la distribution de la boisson depuis le récipient, et dans lequel la boisson est un liquide où un gaz peu soluble et induisant de l'effervescence est dissous, ledit produit de boisson étant **caractérisé en ce que** la boisson est maintenue sous une pression de gaz, dans l'espace libre (4) au-dessus de la boisson liquide dans le récipient, suffisante pour provoquer l'écoulement de la boisson depuis le distributeur sous la forme d'un liquide effervescent lorsque la valve est ouverte.

2. Produit de boisson selon la revendication 1, dans lequel la boisson est maintenue sous une pression de gaz dans l'espace libre d'au moins 2,5 atmosphères à une température de 5 à 15°C.

3. Produit de boisson selon la revendication 1 ou la revendication 2, dans lequel le gaz peu soluble et induisant de l'effervescence est choisi dans le groupe constitué de l'oxygène, l'azote, l'oxyde nitreux, l'hydrogène, des gaz nobles, des hydrocarbures gazeux et des mélanges de ces gaz.

4. Produit de boisson selon la revendication 3, dans lequel le gaz peu soluble et induisant de l'effervescence est l'oxygène.

5. Produit de boisson selon l'une quelconque des revendications précédentes, dans lequel est dissous un gaz supplémentaire, qui est plus soluble dans l'eau que ledit gaz peu soluble et induisant de l'effervescence et dont la pression partielle dans l'espace libre ne dépasse pas 1 atmosphère absolu à une température de 18°C.

6. Produit de boisson selon la revendication 5, dans lequel le gaz supplémentaire est du dioxyde de carbone.

7. Produit de boisson selon la revendication 1, dans lequel la quantité de boisson liquide et de gaz induisant de l'effervescence à l'intérieur du récipient est telle que plusieurs portions du liquide effervescent peuvent être distribuées pendant une période de temps donnée par des ouvertures successives de la valve.

8. Produit de boisson selon l'une quelconque des revendications précédentes, dans lequel la valve est une valve aérosol.

9. Produit de boisson selon l'une quelconque des revendications précédentes, dans lequel la boisson est de l'eau ou une boisson à base de thé ou de café.

10. Produit de boisson selon l'une quelconque des revendications précédentes, dans lequel le distributeur comprend un actionneur (20) dans la partie évacuation du distributeur qui peut servir à ouvrir la valve afin de libérer le liquide effervescent du récipient, l'actionneur étant mis en forme et positionné pour une mise en service à l'aide de la bouche ou les dents d'un utilisateur afin de provoquer ou de permettre la libération du liquide directement dans la bouche de l'utilisateur.

11. Produit de boisson selon la revendication 10, dans lequel l'actionneur comprend un bouton (26) monté dans la partie évacuation, le bouton pouvant se mouvoir entre une position de valve fermée et une position de valve ouverte au moyen d'une morsure appliquée à la partie évacuation.

12. Produit de boisson selon l'une quelconque des revendications précédentes, dans lequel le récipient possède un tube immergé (6) qui est fixé à la valve à l'intérieur du récipient et qui s'étend à l'intérieur du récipient de sorte que l'extrémité du tube immergé se situe au-dessous du niveau de la boisson lorsque le récipient est vertical de manière à ce que le liquide effervescent passe par le tube immergé lorsque la valve est ouverte par la pression du gaz dans l'espace libre.

13. Produit de boisson selon la revendication 12, dans lequel le tube immergé possède une ouverture (18) qui communique entre l'espace libre au-dessus de la boisson dans le récipient et l'intérieur du tube immergé, permettant au gaz présent dans l'espace libre d'être entraîné dans le liquide distribué par le tube immergé lorsque la valve est ouverte.

14. Produit de boisson selon la revendication 13, dans lequel la quantité de gaz expulsé du récipient, lorsque la valve est ouverte, est supérieure à 0,5 centimètre cube pour 1 centimètre cube de boisson liquide, quantité mesurée à pression atmosphérique et à une température de 20°C.

15. Produit de boisson selon la revendication 1, dans lequel l'espace libre à l'intérieur du récipient représente entre 10% et 80% du volume du récipient.

16. Produit de boisson selon la revendication 1, qui comprend un dispositif permettant d'empêcher l'ouverture de la valve lorsque le distributeur est inversé.

17. Produit de boisson selon la revendication 1, dans lequel le gaz peu soluble et induisant de l'effervescence est contenu dans un accessoire (36) qui libère son contenu dans le récipient lorsque la valve est ouverte.

18. Produit de boisson selon la revendication 16, dans lequel l'accessoire contient un arôme concentré qui est libéré dans le récipient lorsque la valve est ouverte.

19. Procédé permettant de produire un liquide effervescent de boisson comprenant le fait de mettre en place une boisson liquide dans un récipient, d'assurer l'étanchéité du récipient, d'introduire un gaz peu soluble et induisant de l'effervescence dans le récipient de sorte que la pression de gaz dans l'espace libre du récipient soit suffisante pour provoquer l'écoulement de la boisson depuis le distributeur sous la forme d'un liquide effervescent lorsque la valve est ouverte, et d'ouvrir cette valve pour libérer la boisson sous la forme dudit liquide effervescent.
